# EUROPÄISCHE PATENTANMELDUNG

(11) **EP 4 631 692 A2**
(43) Veröffentlichungstag der Anmeldung: **15.10.2025**
(21) Anmeldenummer: 25197854.0
(22) Anmeldetag: 13.12.2022
(51) Int. Cl.: B29C 43/58

(54) **VERFAHREN ZUR HERSTELLUNG EINES SANITÄRGEGENSTANDS**

(30) Priorität: 22.04.2022 DE 102022109742
(62) Teilanmeldung aus: 22213148.4
(71) Anmelder: Ucosan b.v. (Villeroy & Boch Wellness), 9301 ZR Roden (NL)
(72) Erfinder: de Vries, Hendrik Grieto, 9406 Assen (NL); Amir, Naushad Ali, 8446 Heerenveen (NL)
(74) Vertreter: Meissner Bolte Partnerschaft mbB

(57) **Zusammenfassung**

Die Erfindung betrifft einen Sanitärgegenstand (10), wie beispielsweise Duschtasse, Badewanne, Waschbecken, Toilettendeckel, Sitzring oder Badezimmermöbel, Boden- oder Wandpaneel, Schürze für Badewanne oder Haushaltsgegenstand, wie beispielsweise Stuhl, Tisch, Möbel, beispielsweise Sofa, aus einem zumindest teilweise polymerisierten Kunststoffmaterial, wobei der Sanitärgegenstand (10) einen sandwichartigen Aufbau mit einem im Inneren des Gebrauchsgegenstands (10) angeordneten Blasen (40) aufweisenden Kernbereich (20) umfasst, der von einem Mantelbereich (30) aus durchpolymerisiertem Kunststoffmaterial umgeben ist, der einen blasenfreien Kunststoffmantel mit einer glatten und/oder strukturierten und formentreuen Oberflächenkontur bildet.

## Beschreibung

Die Erfindung betrifft einen Gebrauchsgegenstand, nämlich einen Sanitärgegenstand, gemäß dem Oberbegriff von Patentanspruch 1.

Gebrauchsgegenstände, wie beispielsweise Sanitärgegenstände oder Haushaltsgegenstände, die in Form von Duschtassen, Badewannen, Waschbecken oder Badezimmermöbeln, eines Boden- oder Wandpaneels, einer Schürze für Badewannen aber auch in Form eines Stuhls, Tischs, Sofas oder anderweitigen Möbels ausgebildet sein können, sind seit langem bekannt.

Derartige Gebrauchsgegenstände können aus vielerlei Materialien, wie beispielsweise Holz oder Metall, aber auch aus Kunststoff hergestellt sein.

Bei solchen Gebrauchsgegenständen aus Kunststoff kommt vielfach ein Herstellungsverfahren zum Einsatz, bei welchem ein polymerisierbares Kunststoffmonomer unter Einsatz eines Polymerisationsinitiators polymerisiert wird, wobei das fertig polymerisierte Kunststoffprodukt dann die Form des gewünschten Gebrauchsgegenstands hat. Eine derartige Herstellung eines Gebrauchsgegenstands mittels Polymerisation wird üblicherweise in einer Hohlform durchgeführt, welche eine genaue Negativkontur des herzustellenden Gebrauchsgegenstands darstellt und in welche das polymerisierbare Kunststoffmonomer nebst Polymerisationsinitiator eingefüllt wird.

Ein hierbei auftretendes Problem besteht allerdings darin, dass der polymerisierende Kunststoff während der Polymerisation eine Schrumpfung erfährt. Dies führt in der Konsequenz zu einem Verlust an Oberflächenqualität auf beiden Seiten des herzustellenden Gebrauchsgegenstands.

In der Vergangenheit wurde versucht dieses Schrumpfungsproblem zu lösen, indem die Formenhälften einer Form, in welcher der gewünschte Gebrauchsgegenstand polymerisiert wurde, auf unterschiedliche Temperaturen erwärmt wurden, wobei eine Sichtseite und eine Rückseite unterschieden wurde. Gemäß dem Stand der Technik wurde hierbei die der Sichtseite zugewandte jeweilige Formenhälfte der Form stärker und schneller erwärmt als die der Rückseite zugeordnete Formenhälfte. Dies führte dazu, dass eine Schrumpfung der Polymermasse maßgeblich auf der Rückseite des gewünschten Gebrauchsgegenstands erfolgte. Auf diese Weise konnte gemäß dem Stand der Technik zwar eine einigermaßen glatte formschöne Sichtseite eines Gebrauchsgegenstands erzeugt werden, während allerdings im Gegenzug die Rückseite des hergestellten Gebrauchsgegenstands maßgebliche Zeichen einer Schrumpfung der Polymermasse zeigte.

Ein weiteres in der Vergangenheit angewandtes Verfahren zur Verbesserung eines äußeren Erscheinungsbilds von aus polymerisierbaren Materialien hergestellten Gebrauchsgegenständen bestand ferner darin, das aufgrund des Schrumpfungsprozesses während der Polymerisation entstandene Leervolumen in der Hohlform mit weiterem Kunststoffmonomer aufzufüllen, um auf diese Weise das Schrumpfungsvolumen zu kompensieren, um so eine halbwegs glatte Oberfläche des hergestellten Gebrauchsgegenstands sowohl auf der Sichtseite als auch auf der Rückseite zu erhalten.

Des Weiteren führt eine Schrumpfung, die vor allem auf der Rückseite des Produkts auftritt und eine schlechte Oberfläche verursacht, ferner auch zu einer Schwächung einer Festigkeit des Produkts, was in der Konsequenz letztlich durch eine Erhöhung der Produktdicke kompensiert werden muss, um die einschlägigen EN-Normen für das Produkt, wie beispielsweise die Norm EN 15334, zu erfüllen. Dies bedeutet jedoch wiederum, dass zur Herstellung des Produkts, respektive Gebrauchsgegenstands, mehr Material verwendet werden muss, was ebenfalls wiederum zu höheren Herstellungskosten des Gebrauchsgegenstands führt.

Mit diesem Verfahren einhergehende Nachteile bestehen jedoch nicht nur in einer komplizierten Verfahrensführung, insbesondere beim Nachfüllen des weiteren Kunststoffmonomers, sondern auch in einem aufgrund der Nachfüllung notwendigen erhöhten Materialbedarfs an Kunststoffmonomer, was wiederum zu erhöhten Kosten bei der Herstellung des gewünschten Gebrauchsgegenstands führt.

Der Erfindung liegt die Aufgabe zugrunde, diese aus dem Stand der Technik bekannten Nachteile bei der Herstellung eines Gebrauchsgegenstands aus einem polymerisierbaren Kunststoff auf einfache und kostengünstige Weise zu vermeiden und einen Gebrauchsgegenstand mit optimierter glatter und formentreuer Oberflächenkontur zur Verfügung zu stellen sowie ferner ein Verfahren zur Herstellung eines derartigen Gebrauchsgegenstands anzubieten.

Diese Aufgabe wird durch einen Gebrauchsgegenstand gemäß Patentanspruch 1 gelöst.

Insbesondere wird diese Aufgabe durch einen Gebrauchsgegenstand, nämlich Sanitärgegenstand, wie beispielsweise Duschtasse, Badewanne, Waschbecken oder Badezimmermöbel, eines Boden- oder Wandpaneels, einer Schürze für Badewanne oder Haushaltsgegenstand, wie beispielsweise Stuhl, Tisch, Möbel, beispielsweise Sofa, aus einem zumindest teilweise polymerisierten Kunststoffmaterial gelöst, wobei der Gebrauchsgegenstand einen sandwichartigen Aufbau mit einem im Inneren des Gebrauchsgegenstands angeordneten Blasen aufweisenden Kernbereich umfasst, der von einem Mantelbereich aus durchpolymerisiertem Kunststoffmaterial umgeben ist.

Ein wesentlicher Punkt der Erfindung liegt darin, dass der erfindungsgemäße Gebrauchsgegenstand einen sandwichartigen Aufbau hat, der aus einem durchpolymerisierten Kunststoffmantel mit einer glatten und formentreuen Oberflächenkontur besteht, der in seinem Inneren einen Blasen aufweisenden Kernbereich hat, durch den eine Schrumpfung des polymerisierten Kunststoffmaterials an der Oberfläche des herzustellenden Gebrauchsgegenstands kompensiert, respektive vermieden, wird.

In erstaunlich einfacher und äußerst effizienter Weise ist es den Erfindern des Gebrauchsgegenstands sowie des zu seiner Herstellung entwickelten Verfahrens somit gelungen, eine Schrumpfung des zur Herstellung des Gebrauchsgegenstands verwendeten Monomermaterials während der Polymerisation zu vermeiden und einen Gebrauchsgegenstand herzustellen, der nicht nur auf einer Sichtseite, wie beim Stand der Technik, sondern an seiner gesamten äußeren Oberfläche eine optimierte glatte und/oder nach Wunsch strukturierte und formentreue Oberflächengestalt aufweist, die exakt der inneren Oberfläche und Struktur der verwendeten Hohlform entspricht.

Erfindungsgemäß weist der Blasen aufweisende Kernbereich des hergestellten Gebrauchsgegenstands im Gegensatz zu dem den Kernbereich umgebenden Mantelbereich des Gebrauchsgegenstands, der aus vollständig polymerisiertem Polymer, d.h. dem fertigen Polymerkunststoff aus dem der Gebrauchsgegenstand hergestellt ist, besteht, noch nicht und/oder noch nicht vollständig polymerisiertes Monomermaterial des Kunststoffmaterials auf.

Aufgrund der Tatsache, dass der Kernbereich des erfindungsgemäßen Gebrauchsgegenstands Blasen aufweist, weist der Kernbereich erfindungsgemäß eine geringere Dichte als der den Kernbereich umgebende Mantelbereich auf, was in vorteilhafter Weise zu einem im Vergleich zu vergleichbaren gemäß dem Stand der Technik hergestellten Gebrauchsgegenständen geringeren Gewicht des erfindungsgemäßen Gebrauchsgegenstands beiträgt.

Erfindungsgemäß erstreckt sich der Kernbereich einer Geometrie des Gebrauchsgegenstands folgend sandwichartig innerhalb des gesamten Gebrauchsgegenstands, wobei der Mantelbereich den Kernbereich über die gesamte Gestalt, respektive Geometrie, des Gebrauchsgegenstands umgibt und sich der Blasen aufweisende Kernbereich in alle Extremitäten sowie Vor- und Rücksprünge des Gebrauchsgegenstands hineinerstreckt bzw. der jeweiligen Kontur des Gebrauchsgegenstands folgt. Der Blasen aufweisende Kernbereich erstreckt sich hierbei jedoch niemals bis an die Oberfläche des Gebrauchsgegenstands, so dass diese Oberfläche des Gebrauchsgegenstands immer eine perfekte Oberfläche aufweist, die keinerlei Fehlstellen und/oder Unreinheiten weder hinsichtlich Material noch hinsichtlich Erscheinungsbild hat.

Hierbei ist der Kernbereich des Gebrauchsgegenstands gemäß einer Ausführungsform der Erfindung vorzugsweise vollständig von durchpolymerisiertem Kunststoffmaterial des Mantelbereichs des Gebrauchsgegenstands umgeben, so dass der Gebrauchsgegenstand an seiner gesamten äußeren Oberfläche die gewünschte glatte und/oder strukturierte formentreue Oberfläche aufweist und der Gebrauchsgegenstand über eine homogene Gewichtsverteilung verfügt.

Der Gebrauchsgegenstand besteht hierbei vorzugsweise nur aus einem einzigen Material, nämlich dem zur Herstellung des Gebrauchsgegenstands verwendeten Monomer und dem sich daraus durch Polymerisation ergebenden Polymermaterial. Weitere feste, flüssige und/oder gasförmige bläh- und/oder treibfähige Substanzen sind zur Herstellung eines Basiskörpers des erfindungsgemäßen Gebrauchsgegenstands nicht notwendig.

Gemäß einer bevorzugten Ausführungsform der Erfindung liegt eine Dicke des Kernbereichs im Wesentlichen im Bereich von einem Drittel einer Gesamtdicke des Gebrauchsgegenstands ±30%, bevorzugt ±20% und besonders bevorzugt ±10%. Der Kernbereich ist hierbei hinsichtlich eines Querschnitts des Gebrauchsgegenstands bevorzugt im Wesentlichen zentral zwischen in etwa gleich dicken Mantelbereichen eines jeweils betreffenden Abschnitts des Gebrauchsgegenstands angeordnet, wodurch der Gebrauchsgegenstand eine über seinen gesamten Körper hinweg im Wesentlichen konstante Gewichtsverteilung und Stabilität erlangt.

Des Weiteren sind der Kernbereich und der Mantelbereich des Gebrauchsgegenstands erfindungsgemäß aus einem jeweils identischen polymerisierbaren Kunststoffmaterial gebildet. In vorteilhafter Weise besteht der erfindungsgemäße Gebrauchsgegenstand somit gemäß einer Ausführungsform der Erfindung, wie vorerwähnt, aus einem homogenen Kunststoffmaterial, was nicht nur seine Herstellung, sondern auch seine Recycelbarkeit äußerst positiv beeinflusst. In Bezug auf die Herstellung des erfindungsgemäßen Gebrauchsgegenstands ist somit nur ein einziges polymerisierbares Kunststoffmaterial notwendig, um den erfindungsgemäßen Gebrauchsgegenstand herzustellen. Insofern kann die Herstellung des erfindungsgemäßen Gebrauchsgegenstands einfach und kostengünstig durchgeführt werden, da keine zusätzlichen Kunststoffe und/oder Hilfsstoffe benötigt werden und auf etwaige Zusätze von anderen unter Umständen auch polymerisierbaren Kunststoffen keine Rücksicht genommen werden muss. In Bezug auf die Recycelbarkeit des erfindungsgemäßen Gebrauchsgegenstands ist aus diesem Grund keine aufwändige Materialtrennung etwaiger unterschiedlicher Kunststoffe oder anderweitiger Materialien notwendig, die häufig auch überhaupt nicht möglich wäre, sondern der erfindungsgemäße Gebrauchsgegenstand kann "so wie er ist" einem Wiederverwertungsprozess zugeführt werden.

Aufgrund des homogenen Aufbaus des erfindungsgemäßen Gebrauchsgegenstands kann der Gebrauchsgegenstand in vorteilhafter Weise monolithisch aufgebaut sein, was wiederum zu einer verbesserten Stabilität des erfindungsgemäßen Gebrauchsgegenstands und der Möglichkeit beiträgt, den erfindungsgemäßen Gebrauchsgegenstand in einem Schritt, d. h. ohne etwaige Montagemaßnahmen oder Nachbearbeitungsschritte, zu fertigen.

In Bezug auf die Materialien, die zur Herstellung des erfindungsgemäßen Gegenstands infrage kommen, sei darauf hingewiesen, dass zwar der Einsatz eines einzigen polymerisierbaren Kunststoffs bevorzugt ist, jedoch nach Wunsch auch ein Einsatz von Mischungen von Kunststoffen erfindungsgemäß möglich ist.

Hierbei kommt als Kunststoffmaterial gemäß einer bevorzugten Ausführungsform der Erfindung insbesondere wenigstens ein thermisch härtbares Harz in Betracht, das insbesondere auf einer oder mehrerer der nachfolgenden Substanzen basiert: Acrylat, Polyester, Urethan, Epoxid, Polymerbeton, Mineralguss oder Mischungen der vorgenannten Substanzen.

Diesbezüglich sei insbesondere erwähnt, dass es sich hierbei auch um gefüllte thermisch härtbare Harze handeln kann, wie beispielsweise ein quartzgefülltes Methacrylat.

Des Weiteren wird der erfindungsgemäße Gebrauchsgegenstand, insbesondere Sanitärgegenstand, durch ein Verfahren gemäß vorstehenden Ausführungen hergestellt, wobei das Verfahren die folgenden Schritte umfasst:
a) Herstellen einer Reaktionsmischung durch Mischen eines polymerisierbaren Kunststoffmaterials mit wenigstens einem Niedertemperaturinitiator und mit wenigstens einem Hochtemperaturinitiator;
b) Einfüllen der Reaktionsmischung in eine Kavität einer Form zur Herstellung des Gebrauchsgegenstands, wobei die Form aus wenigstens zwei miteinander verbindbaren beheizbaren Formteilen gebildet ist;
c) Erwärmen der Formteile auf eine erste Temperatur zur Aktivierung des wenigstens einen Niedertemperaturinitiators zur Initiierung einer Polymerisation der Reaktionsmischung;
d) weiteres Erwärmen der Formteile auf eine zweite höhere Temperatur zur Aktivierung des wenigstens einen Hochtemperaturinitiators;
e) Halten der zweiten Temperatur für eine vordefinierte Zeitspanne;
f) Abkühlen der Formteile; und
g) Entformen des aus der Reaktionsmischung hergestellten Gebrauchsgegenstands.

Ein wichtiger Punkt des Verfahrens besteht darin, dass ein polymerisierbares Kunststoffmonomer verwendet wird, das unter Verwendung von zwei bei unterschiedlichen Temperaturen aktivierbaren Polymerisationsinitiatoren polymerisiert wird. Bei diesen zwei unterschiedlichen Polymerisationsinitiatoren handelt es sich um einen Niedertemperaturinitiator und um einen Hochtemperaturinitiator. Diese beiden Polymerisationsinitiatoren werden mit dem polymerisierbaren Kunststoffmonomer gemischt und gemäß einer Ausführungsform der Erfindung bei einer möglichst niedrigen Temperatur, bei der ein Verdampfen der Reaktionsmischung und insbesondere des Monomers vermieden wird, in eine Kavität einer Hohlform zur Herstellung des Gebrauchsgegenstands eingefüllt.

Als weiterer wichtiger Verfahrensschritt werden jeweilige die Hohlform bildende Formteile der Form, die einer Sichtseite und einer Rückseite des herzustellenden Sanitärgegenstands zugeordnet sind, auf eine erste Temperatur erwärmt, bei welcher der Niedertemperaturinitiator eine Polymerisation des Kunststoffmonomers auslöst, um das aus dem Kunststoffmonomer resultierende Polymer zu erzeugen.

Aufgrund der Tatsache, dass die Polymerisation aufgrund einer Erwärmung der die Hohlform bildenden Formteile der Form auf die erste Temperatur, bei welcher der Niedertemperaturinitiator aktiviert wird, gestartet wird, beginnt die Polymerisation des Kunststoffs jeweils angrenzend an die die Hohlform bildenden Formteile der Form, so dass sich angrenzend an die innere Oberfläche der Hohlform das den späteren Gebrauchsgegenstand bildende Polymer ausbildet.

Im weiteren Fortgang des Verfahrens wird die Temperatur der die Hohlform bildenden Formteile der Form auf die zweite höhere Temperatur erhöht, bei welcher eine Aktivierung des Hochtemperaturinitiators erfolgt, wodurch sich die Polymerisationsgeschwindigkeit erhöht und die Temperatur aufgrund der exothermen Reaktionswärme innerhalb des Kunststoffs weiter ansteigt, so dass die Temperatur im Inneren des Kunststoffs zu einem zumindest teilweisen Verdampfen der Kunststoffmonomeren und zur Bildung von Blasen und damit einhergehend zu einem Druckanstieg im Inneren des Kunststoffs führt. Dieser Druckanstieg im Inneren des Kunststoffs führt seinerseits wiederum dazu, dass der aus dem bereits fertig durchpolymerisierten Polymer gebildete Mantel des späteren Gebrauchsgegenstands fest und innig an die innere Oberfläche der Hohlform angepresst wird.

An dieser Stelle sei ausdrücklich darauf hingewiesen, dass die Temperaturerhöhung auf zunächst die erste Temperatur und sodann auf die zweite Temperatur kontinuierlich erfolgt und kein "Halten" der Temperatur, beispielsweise auf der ersten Temperatur, erfordert. Die erste Temperatur wird vielmehr bei der Erhöhung der Temperatur, beginnend mit einer, wie vorerwähnt, möglichst niedrigen Einfülltemperatur für das Monomer oder die Reaktionsmischung, auf die zweite Temperatur "durchlaufen", wobei der Niedertemperaturinitiator aktiviert wird, ohne dass die Temperaturerhöhung bei Erreichen oder im Bereich der ersten Temperatur gestoppt oder für einige Zeit gehalten wird. Ein Anhalten der Temperaturerhöhung findet erst bei Erreichen der zweiten Temperatur statt, die dann, wie nachfolgend erläutert, gehalten wird. Auf diese Weise kann das Verfahren zur Herstellung des Gebrauchsgegenstands sehr schnell und effektiv durchgeführt werden.

Ein weiterer wichtiger Punkt des Verfahrens besteht ferner darin, die zweite höhere Temperatur eine ausreichend lange Zeit zu halten, um ein vorzeitiges Abbrechen des Polymerisationsvorgangs zu verhindern und auf diese Weise einen Innendruck innerhalb des Kunststoffs aufrechtzuerhalten.

Des Weiteren wurde herausgefunden, dass ein weiterer wichtiger Punkt des Verfahrens darin besteht, den Temperaturanstieg innerhalb des polymerisierenden Kunststoffs so zu begrenzen, dass das Kunststoffmonomer zwar zu sieden beginnt und auf diese Weise Druck gegen die innere Quasi-Oberfläche des bereits polymerisierten Polymers ausübt und das polymerisierte Polymer auf diese Weise an die innere Wandung der Hohlform anpresst, jedoch ein übermäßiges Sieden vermieden wird, um die durch das Sieden des Kunststoffmonomers erzeugten Blasen innerhalb des Kernbereichs des herzustellenden Gebrauchsgegenstands zu halten, ohne dass die Blasen in den Mantelbereich des herzustellenden Gebrauchsgegenstands vordringen.

Diese Temperaturbegrenzung wird einerseits dadurch erreicht, dass die die Hohlform bildenden Formteile der Form zunächst auf der zweiten höheren Temperatur gehalten werden, wobei die die Hohlform bildenden Formteile der Form ab einem gewissen Punkt der Polymerisation, bei welchem die Temperatur des polymerisierenden Kunststoffs aufgrund der exothermen Reaktionswärme der Polymerisation die zweite höhere Temperatur überschritten hat, nicht mehr als Erwärmungsmittel, sondern als Kühlungsmittel dienen, so dass an den Formteilen keine über die zweite höhere Temperatur hinausgehende Erwärmung stattfindet. Die zweite höhere Temperatur stellt somit die Erwärmungsendtemperatur des Verfahrens dar. In einem weiteren Schritt erfolgt sodann eine Abkühlung der die Hohlform bildenden Formteile sowie ein Entformen des aus der Reaktionsmischung hergestellten Gebrauchsgegenstands.

Gemäß einer bevorzugten Ausführungsform der Erfindung werden die Schritte zur Erwärmung der Formteile der Form sowohl auf der Sichtseite als auch auf der Rückseite, insbesondere auf allen Seiten, des herzustellenden Gebrauchsgegenstands synchron durchgeführt.

So wird auf äußerst einfache Weise erreicht, dass eine durch den Niedertemperaturinitiator initiierte erste Quasi-Niedertemperatur-Polymerisation, die zur Ausbildung des durchpolymerisierten Mantelbereichs des herzustellenden Gebrauchsgegenstands führt, simultan stattfindet und sich der Mantelbereich auf diese Weise ebenso simultan entlang der gesamten inneren Oberfläche der Hohlform gleichmäßig ausbildet. Aus diesem Grund werden die Erwärmungsschritte c) und d) im Wesentlichen, insbesondere genau, synchron durchgeführt.

Des Weiteren wird gemäß einer weiteren Ausführungsform der Erfindung auch der Schritt zum Halten der Temperatur gemäß Schritt e) bei allen die Hohlform bildenden Formteilen im Wesentlichen, insbesondere genau, synchron durchgeführt, um über die gesamte Hohlform eine gleichzeitige Aktivierung des Hochtemperaturinitiators zu bewirken, so dass sich die zur Erhöhung des Innendrucks innerhalb der Kunststoffmatrix zur Bildung von Blasen aus Monomermaterial notwendige Temperatur über die gesamte Hohlform, respektive den gesamten herzustellenden Gebrauchsgegenstand, ebenso simultan einstellt und aufgrund der damit einhergehenden Druckerhöhung das den Mantelbereich bildende Polymermaterial gleichmäßig und homogen gegen die innere Oberfläche der Hohlform presst.

Gemäß einer weiteren Ausführungsform der Erfindung kann die Abkühlung der Formteile in Schritt f) asynchron durchgeführt werden, wobei vorzugsweise die Temperatur der Formteile auf der Sichtseite des herzustellenden Gebrauchsgegenstands etwas länger auf einer höheren Temperatur als auf der Rückseite des herzustellenden Gebrauchsgegenstands gehalten wird, dann jedoch schneller als auf der Rückseite des herzustellenden Gebrauchsgegenstands reduziert wird. Eine Abkühlung der Rückseite des herzustellenden Gebrauchsgegenstands erfolgt demgegenüber etwas früher und langsamer. Auf diese Weise wird auch eine Entformung der Rückseite des Gebrauchsgegenstands erleichtert, wobei bei der Entformung des Gebrauchsgegenstands die perfekt hergestellten Oberflächen des Gebrauchsgegenstands, insbesondere sowohl auf dessen Sichtseite als auch dessen Rückseite, erhalten bleiben.

Durch eine derartige asynchrone Abkühlung wird erreicht, dass die sich im Inneren des hergestellten Gebrauchsgegenstands, d. h. die in dessen Kernbereich gebildeten Blasen innerhalb des gebildeten durchpolymerisierten Mantelbereichs quasi "eingefroren" werden, wobei die Blasengröße und damit der durch die Blasen gegen den Mantelbereich erzeugte Druck erhalten bleiben.

Wie sich gezeigt hat, kann durch die vorgenannte Verfahrensführung eine Schrumpfung des zur Herstellung des Gebrauchsgegenstands verwendeten Kunststoffs praktisch vollständig vermieden bzw. kompensiert werden, da die Schrumpfung des Kunststoffs während der Polymerisationsreaktion durch das Volumen der sich im Inneren des Kunststoffs ausgebildeten Blasen praktisch, insbesondere vollständig, ausgeglichen wird.

In äußerst vorteilhafter Weise ist es somit weder notwendig Polymermaterial nachzufüllen, um eine etwaige Schrumpfung, wie es beim Stand der Technik bislang immer notwendig war, auszugleichen, noch den hergestellten Gebrauchsgegenstand aufwändig nachzubearbeiten, um durch den Schrumpfungsprozesses bedingte Oberflächendefekte zu beseitigen.

Gemäß einer weiteren Ausführungsform der Erfindung werden die Formteile, aus welchen die zur Herstellung des gewünschten Gebrauchsgegenstands notwendige Hohlform zusammengesetzt ist, zu einer druckfesten stabilen Form zusammengefügt, die dem durch das erwärmte Kunststoffmaterial erzeugten Innendruck standhält.

Hinsichtlich der für das Verfahren verwendeten Polymerisationsinitiatoren werden gemäß einer Ausführungsform der Erfindung bevorzugt Peroxidverbindungen verwendet, wobei der jeweilige Niedertemperaturinitiator eine Aktivierungstemperatur im Bereich von 40°C ± 15°C, bevorzugt ± 12°C und besonders bevorzugt ± 8°C und der Hochtemperaturinitiator eine Aktivierungstemperatur im Bereich von 110°C ± 20°C, bevorzugt ± 15°C und besonders bevorzugt ± 10°C hat.

Eine Verwendung von Polymerisationsinitiatoren mit diesen Temperaturbereichen bietet den maßgeblichen Vorteil, dass mit derartigen Polymerisationsinitiatoren nahezu alle gängigen mittels Peroxiden initierbaren polymerisierbaren Kunststoffmaterialien für das Verfahren verwendet werden können.

Zusammenfassend kann der Gegenstand der vorliegenden Erfindung somit wie folgt festgehalten werden.

Durch eine Verwendung eines sogenannten Sandwich-Protokolls und einer Rezeptur, nämlich einer Reaktionsmischung aus einem Kunststoffmonomer sowie zwei bei verschiedenen Temperaturen initiierbaren Polymerisationsinitiatoren, d.h. einem Niedertemperaturinitiator und einem Hochtemperaturinitiator, können nahezu alle Schrumpfungen kompensiert und eine gute Oberflächenqualität auf beiden Seiten eines Gebrauchsgegenstands erreicht werden.

Unter Verwendung des sogenannten Sandwich-Protokolls können eine Schrumpfung im Zuge einer Polymerisationsreaktion vermieden und glatte Oberflächen auf beiden Seiten eines Gebrauchsgegenstands erhalten werden. Darüber hinaus kann ein stabilerer Gebrauchsgegenstand erzeugt werden, da bekannt ist, dass eine Oberfläche ohne Fehler deutlich stärker als eine mit Fehlern ist.

Für das Verfahren ist zunächst ein Temperaturprogramm erforderlich, durch das sichergestellt ist, dass eine Polymerisation auf beiden Seiten eines herzustellenden Gebrauchsgegenstands, d.h. auf einer Vorder- und auf einer Rückseite des Produkts, respektive Gebrauchsgegenstands, gleichzeitig beginnt. Die gleichzeitig beginnende Polymerisationsreaktion auf beiden Seiten des herzustellenden Gebrauchsgegenstands führt zu einer hohen Innentemperatur in der Polymerisationsmatrix.

Bei dem sogenannten Sandwich-Protokoll wird sichergestellt, dass die herzustellende Vorder- und die herzustellende Rückseite des Gebrauchsgegenstands mit dem gleichen Temperaturprofil "gefahren" werden. Dies gewährleistet eine glatte Oberfläche auf beiden Seiten des Produkts.

Aufgrund einer hohen Wärmeeinwirkung auf das zu polymerisierende Material, die von beiden Seiten der Form gleichzeitig ausgeht, ist es wichtig, dass
1) neben einem Niedertemperaturinitiator ein zweiter Initiator verwendet wird, der bei einer höheren Temperatur aktiviert wird, um einen vorzeitigen Abbruch der Polymerisationsreaktion zu verhindern; und
2) ein bestimmter Druck aufrechterhalten und ein feines Temperaturgefälle in der Hohlform angewandt wird, um ein übermäßiges Sieden des Monomers zu verhindern.

Aufgrund der exothermen Reaktion der Polymerisation wird die Temperatur im Inneren des Materials die Temperatur der Form übersteigen. Daher wirken die Formteile der Form als Kühleinheit, so dass das Monomer nur in der Mitte leicht siedet.

Die bei diesem Verfahren aufgrund der Erwärmung des Monomers gebildeten Blasen haben genügend Volumen, um eine Schrumpfung aufgrund der Polymerisationsreaktion des Kunststoffes auszugleichen.

Der Innendruck und die Ausdehnung sorgen dafür, dass das Produkt während der Polymerisation mit beiden Formhälften in Kontakt kommt und die Produktoberflächen perfekt und fehlerfrei sind.

Durch die Verwendung des Sandwich-Protokolls und der Rezeptur kann die Schrumpfung, die ansonsten durch Nachfüllen der Form oder Komprimieren des Raums zwischen den beiden Formhälften kompensiert wird, kompensiert, respektive vermieden werden. Die Schrumpfung eines gefüllten Harzes beträgt etwa 9% des Gesamtproduktgewichts.

Darüber hinaus bietet das Verfahren den Vorteil, dass auf zusätzliche Verfahrensschritte, wie diese beim Stand der Technik notwendig sind, verzichtet werden kann, da beispielsweise bei der Kompensation durch Nachfüllen auch das nachgefüllte Material polymerisiert werden muss, was zusätzliche Zeit kostet. Darüber hinaus verursacht dieses zusätzliche Nachfüllmaterial, d.h.

Kunststoffmonomer, auch zusätzliche Kosten und führt zu einem höheren Gewicht eines Standardprodukts, so dass Letzteres mehr wiegt und daher bei einem Transport schwerer ist und mehr kostet.

Darüber hinaus werden Standardgebrauchsgegenstände zur Vermeidung unschöner Oberflächen üblicherweise aus zwei Formhälften zusammengesetzt, wobei im Zwischenraum zwischen den Formhälften bei einem Zusammendrücken durch einen verwendeten flexiblen Gummi zwischen den Formhälften ein Rand entsteht, der nach einem Aushärten durch Schneiden entfernt werden muss, was beim Stand der Technik wiederum zusätzliche Arbeit und Kosten bedeutet.

Weitere Ausführungsformen der Erfindung ergeben sich aus den Unteransprüchen.

Nachfolgend wird die Erfindung anhand eines Ausführungsbeispiels beschrieben, das anhand der Abbildungen näher erläutert wird. Hierbei zeigen:
- Fig. 1: eine schematische Darstellung eines Gebrauchsgegenstands gemäß dem Stand der Technik in Querschnittsansicht; und
- Fig. 2: eine schematische Darstellung eines Gebrauchsgegenstands gemäß einer erfindungsgemäßen Ausführungsform in Querschnittsansicht.

In der nachfolgenden Beschreibung werden für gleiche und gleichwirkende Teile dieselben Bezugsziffern verwendet.

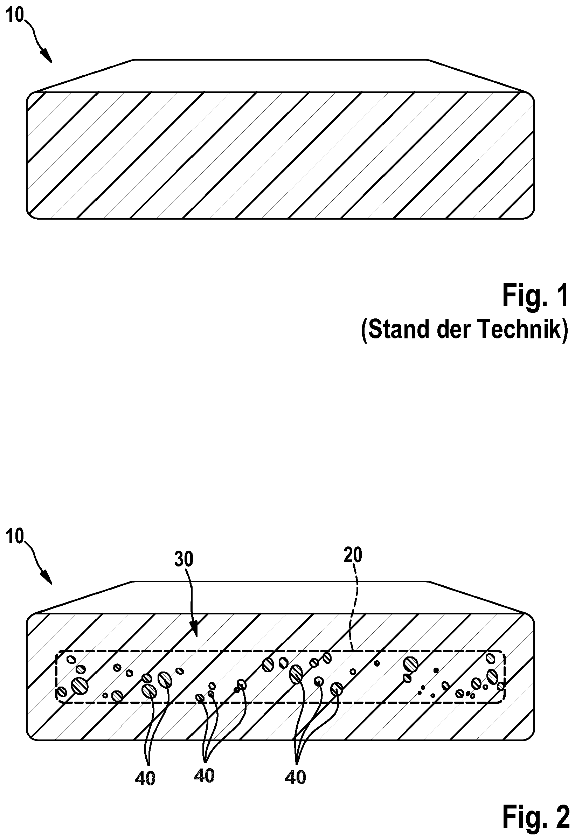

Fig. 1 zeigt einen herkömmlich hergestellten Gebrauchsgegenstand in Querschnittsansicht. Wie zu erkennen ist, ist der Gebrauchsgegenstand vollständig durchpolymerisiert. Eine Kompensation einer Schrumpfung während eines Herstellungsverfahrens mittels Polymerisation kann bei einem derartigen Gebrauchsgegenstand bei einer vorgegebenen Hohlform nur durch eine Zugabe von zusätzlichem Monomermaterial erfolgen.

Fig. 2 zeigt eine schematische Darstellung eines Gebrauchsgegenstands 10 gemäß einer erfindungsgemäßen Ausführungsform in Querschnittsansicht. Wie zu erkennen ist, weist der Gebrauchsgegenstand 10 einen Blasen 40 aufweisenden Kernbereich 20 sowie ferner einen Mantelbereich 30 auf, der den Kernbereich 20 vollständig umgibt. Gemäß Fig. 2 ist der Kernbereich 20 durch eine gestrichelte Linie kenntlich gemacht, wobei sich innerhalb des Kernbereichs 20 Blasen 40 aus Kunststoffmaterial, insbesondere Monomermaterial, befinden, die sich aufgrund einer Temperaturerhöhung aufgrund der exothermen Reaktionswärme während der Polymerisation gebildet haben. Durch diese Blasen innerhalb des Gebrauchsgegenstands 10 und insbesondere innerhalb des Mantelbereichs 30 wird ein innerer Druck gegen den Mantelbereich 30 erzeugt, so dass sich der Mantelbereich 30 während der Polymerisationsreaktion innig an eine innere Oberfläche einer Hohlform anschmiegt. Der erfindungsgemäße Gebrauchsgegenstand 10 weist an sämtlichen äußeren Oberflächen eine glatte und konturtreue Oberfläche auf.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste

- 10: Gebrauchsgegenstand
- 20: Kernbereich
- 30: Mantelbereich
- 40: Blase

## Patentansprüche

1. Sanitärgegenstand (10), wie beispielsweise Duschtasse, Badewanne, Waschbecken oder Badezimmermöbel, Boden- oder Wandpaneel, Schürze für Badewanne oder Haushaltsgegenstand, wie beispielsweise Stuhl, Tisch, Möbel, beispielsweise Sofa, aus einem zumindest teilweise polymerisierten Kunststoffmaterial,
**dadurch gekennzeichnet, dass**
der Sanitärgegenstand (10) einen sandwichartigen Aufbau mit einem im Inneren des Gebrauchsgegenstands (10) angeordneten Blasen (40) aufweisenden Kernbereich (20) umfasst, der von einem Mantelbereich (30) aus durchpolymerisiertem Kunststoffmaterial umgeben ist, der einen blasenfreien Kunststoffmantel mit einer glatten und/oder strukturierten und formentreuen Oberflächenkontur bildet, wobei das Kunststoffmaterial ein gefülltes thermisch härtbares Harz, insbesondere ein quartzgefülltes Methacrylat, ist.

2. Sanitärgegenstand nach Anspruch 1,
**dadurch gekennzeichnet, dass**
der Blasen (40) aufweisende Kernbereich (20) Monomermaterial des Kunststoffmaterials aufweist.

3. Sanitärgegenstand nach einem der vorhergehenden Ansprüche,
**dadurch gekennzeichnet, dass**
der Kernbereich (20) eine geringere Dichte aufweist als der den Kernbereich (20) umgebende Mantelbereich (30).

4. Sanitärgegenstand nach einem der vorhergehenden Ansprüche,
**dadurch gekennzeichnet, dass**
sich der Kernbereich (20) einer Geometrie des Sanitärgegenstands (10) folgend innerhalb des gesamten Sanitärgegenstands (10) erstreckt.

5. Sanitärgegenstand nach einem der vorhergehenden Ansprüche,
**dadurch gekennzeichnet, dass**
der Kernbereich (20) vollständig von durchpolymerisiertem Kunststoffmaterial umgeben ist.

6. Sanitärgegenstand nach einem der vorhergehenden Ansprüche,
**dadurch gekennzeichnet, dass**
eine Dicke des Kernbereichs (20) im Wesentlichen im Bereich von einem Drittel einer Gesamtdicke des Sanitärgegenstands (10) ±30%, bevorzugt ±20% und besonders bevorzugt ±10%, liegt.

7. Sanitärgegenstand nach einem der vorhergehenden Ansprüche,
**dadurch gekennzeichnet, dass**
der Kernbereich (20) und der Mantelbereich (30) des Sanitärgegenstands (10) aus identischem polymerisierbaren Kunststoffmaterial gebildet sind.

8. Sanitärgegenstand nach einem der vorhergehenden Ansprüche,
**dadurch gekennzeichnet, dass**
der Sanitärgegenstand (10) monolithisch aufgebaut ist.

9. Sanitärgegenstand nach einem der vorhergehenden Ansprüche,
**dadurch gekennzeichnet, dass**
das Kunststoffmaterial ein thermisch härtbares Harz ist, das auf einer oder mehrerer der nachfolgenden Substanzen basiert: Acrylat, Polyester, Urethan, Epoxid, Polymerbeton, Mineralguss oder Mischungen der vorgenannten Substanzen.
